# EUROPEAN PATENT SPECIFICATION

(11) **EP 2 332 400 B1**
(45) Date of publication and mention of the grant of the patent: **29.08.2012**
(21) Application number: 10194620.0
(22) Date of filing: 10.12.2010
(51) Int. Cl.: A01B 61/04

(54) **Tine mounting arrangement**
Zinkenaufnahme
Agencement de montage de dent

(30) Priority: 10.12.2009 GB 0921626
(43) Date of publication of application: 15.06.2011
(73) Proprietor: Simba International Ltd, Sleaford, Lincolnshire NG34 7EW (GB)
(72) Inventor: Wright, Philip John, Boston PE21 7EX (GB); Hartley, Adrian Richard, Grantham NG31 8DF (GB)
(74) Representative: Croston, David

(56) References cited:
- AU-B2- 647 742
- FR-A1- 2 670 358
- GB-A- 1 450 928

## Description

The present invention is concerned with a tine mounting arrangement. More particularly, the present invention is concerned with a tine mounting arrangement in which the tine is able to move in two rotational degrees of freedom in order to trip and tilt over and around obstacles in the ground.

Tines used in agriculture can be mounted in a number of ways. The most basic way of mounting a tine is to rigidly attach it to a frame which can then be pulled along behind a tractor vehicle. A problem with this arrangement is that if the tine hits a substantial obstacle in the ground, such as a large rock, shock loading is carried through the tine into the mounting arrangement and ultimately to the frame. Even if this shock loading is not sufficient to structurally damage the tine and/or frame, then repetitive loading of this kind can cause significant fatigue damage to these components.

Various methods of mounting the tine to the frame in order to provide it with the ability to ride over or around obstacles in the ground have been proposed. Many of these solutions rely on allowing relative movement between a component of the frame and a component of the tine via a joint-like mounting arrangement. Although this can reduce the effects of shock loading of the tine and frame, such systems often only move the problem to the joint-like mounting arrangement. This is because in known arrangements, point loading can occur between the two components which form the joint, resulting in high stresses leading to failure. This type of mounting arrangement is known from e.g. GB 1450928 A.

It is an aim of the present invention to provide an improved tine mounting arrangement.

According to a first aspect of the invention, there is provided a mounting arrangement for a tine comprising a mount for attachment to an agricultural vehicle, a tine support member for attachment of a tine, a joint having a first side connected to the mount and a second side connected to the support member, in which one of the first and the second sides comprises a shaft rotatably engaged within a sleeve to rotate about a trip axis, the sleeve being movably mounted relative to the other of the first and the second sides.

Advantageously, providing a shaft rotatably engaged with a sleeve means that a further degree of freedom can be provided with appropriate mounting of the sleeve. Therefore there is no need to linearly movably mount the shaft, and point-to-point contact between the shaft and adjacent components is avoided. The provision of a linearly moveable sleeve permits the provision of constant surface-to-surface contact within the joint. Point loading can be eliminated whilst providing at least two degrees of freedom of the tine relative to the mount.

Preferably, the sleeve defines an external first bearing surface, the joint defines a second bearing surface, and the first and second bearing surfaces are arranged to be in sliding engagement upon movement of the sleeve.

Advantageously, in such an arrangement there is no point loading between the sleeve and the component of the joint upon which it contacts.

An example tine mounting arrangement will now be described with reference to the accompanying drawings in which:
FIGURE 1 is a perspective view of a tine mounting arrangement in accordance with the present invention;

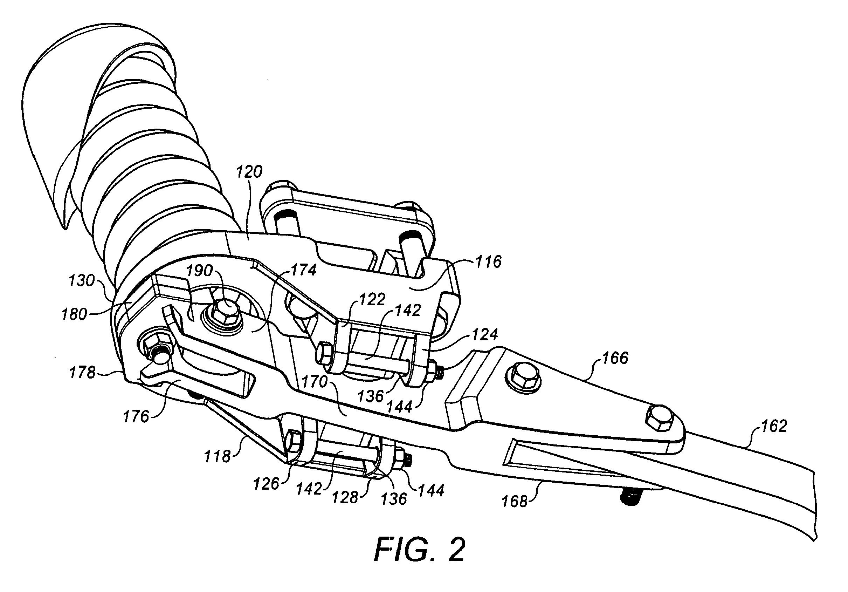

FIGURE 2 is a perspective view from the underside of the tine mounting arrangement of Figure 1;

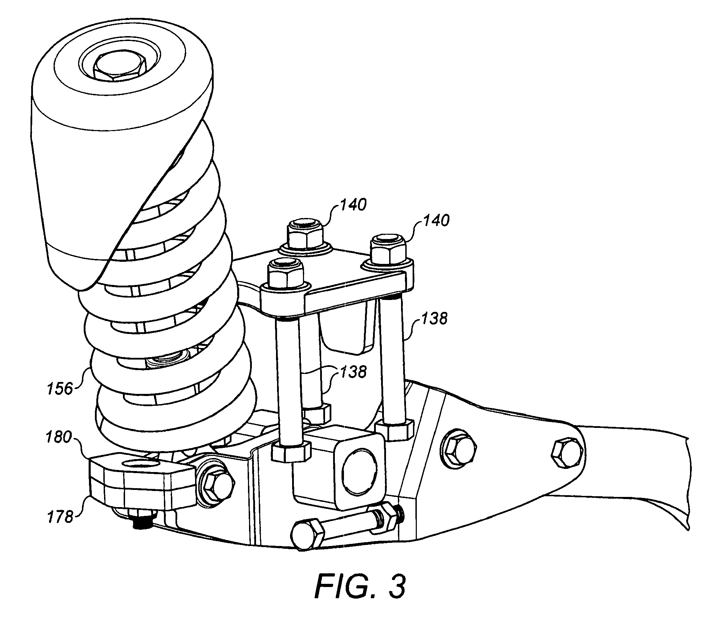

FIGURE 3 is a perspective view of the tine mounting arrangement of Figure 1 with part of the frame removed;
FIGURE 4 is a perspective view of the tine mounting arrangement of Figure 1 demonstrating the tilt degree of freedom;
FIGURE 5 shows the same view as Figure 4 but with part of the frame of the tine mounting arrangement removed;
FIGURE 6 is a front perspective view of the tine mounting arrangement of Figure 1 showing movement in both the tilt and trip degrees of freedom;
FIGURE 7 is a perspective view of the tine mounting arrangement of Figure 1 in the same position as Figure 6 but with part of the frame removed;
FIGURE 8 is a perspective view of the tine mounting arrangement of Figure 1 showing movement in the trip degree of freedom only; and
FIGURE 9 is a perspective view similar to Figure 8 but with part of the frame of the tine mounting arrangement removed.

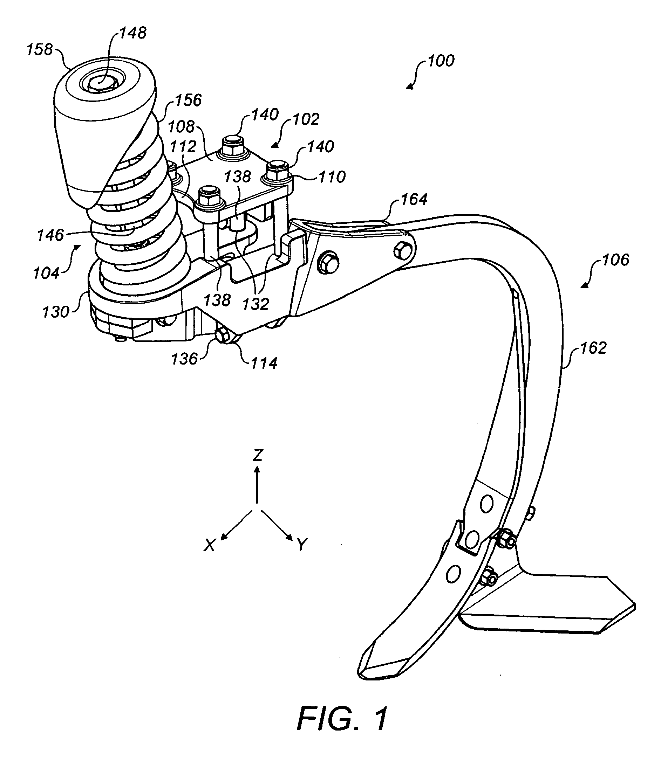

Referring to Figure 1, a tine mounting arrangement 100 is shown. The mounting arrangement 100 comprises a mounting frame 102, a spring assembly 104 and a tine assembly 106.

The mounting frame 102 comprises a square plate 108 having a through-bore 110 in each corner. One side of the plate 108 has a concave circular cut-out 112. The mounting frame 102 further comprises a joint housing 114. The joint housing 114 comprises a first side plate 116 and a second side plate 118. The side plates 116, 118 are parallel and offset and are joined by a base plate 120 mounted perpendicularly thereto. A pair of offset, parallel gusset pieces 122, 124 are disposed between the first side plate 116 and the base plate 120. Similarly, a pair of offset, parallel gusset pieces 126, 128 are disposed between the second side plate 118 and the base plate 120. The gusset pieces 122, 124 are mounted perpendicularly to the first side plate 116 and the base plate 120. Similarly, the gusset pieces 126, 128 are mounted perpendicularly to the second side plate 118 and the base plate 120.

The base plate 120 terminates in a semi-cylindrical flange 130. The flange 130 is a continuation of the side plates 116, 118.

Four through-bores 132 are defined in the base plate 120. The through-bores 132 are spaced per the bores 110 in the plate 108.

In addition, a through-bore 134 passes through the base plate 120 at the origin of the semi-circular flange 130.

A through-bore 136 is made through each of the gusset pieces 122, 124, 126, 128 at the end of the gusset pieces opposite the base plate 120.

The mounting frame 102 is assembled by passing a support bolt 138 upwardly through each of the through-bores 132. A threaded end of the support bolts 138 is passed through each of the bores 110 and the plate 108. A nut 140 is threaded onto each of the support bolts 138 to hold the plates 108 and the joint housing 114 offset from each other.

A motion stop bolt 142 is passed through the facing bores 136 of the gusset pieces 122, 124. A nut 144 is threaded onto the motion stop bolt 142 in order to hold it in place. A further motion stop bolt 142 is threaded through the gusset pieces 126, 128 in the same way.

The spring assembly 104 comprises a rod 146 having a head 148 positioned at a first end thereof. The rod 146 has a threaded portion 150 at a second end thereof. A rod extension 152 comprises an internally threaded shaft joined to a collar 154. The spring assembly 104 further comprises a compression spring 156 and a reaction plate 158. The reaction plate 158 has a bore defined therethrough for receiving the rod 146. The head 148 of the rod 146 cannot pass through the bore of the reaction plate 158. The rod extension 152 is screwed onto the rod 146 and these two components can be turned relative to each other to adjust the length of the assembled component. Specifically the distance between the collar 154 and the head 148 can be adjusted.

The tine assembly 106 comprises a tine joint part 160 and a tine 162. The tine 162 may be of conventional design and as such will not be described further here.

The tine joint part 160 comprises a tine receiving formation 164 comprising two parallel offset plates 166, 168 for receiving the tine 162 and for attachment thereto.

A pivot plate 170 extends from the plates 166, 168 and bifurcates at the opposite end to the plates 166, 168 to form a collar receiving formation 172. The collar receiving formation 172 comprises two offset plates 174,176 having bores defined therethrough. The collar receiving formation 172 comprises a reaction plate 178 perpendicular to the plates 174, 186 and having a cushion 180 attached to the upper surface thereof. The pivot plate 170 further comprises a pair of perpendicularly extending pivot shafts 182, 184.

The tine assembly 106 further comprises a pair of bush blocks 186, 188. Each bush block 186, 188 is square in construction with filleted edges. A circular through-bore runs through and each bush block. The pivot shafts 182, 184 of the joint part pivot plate 170 sit within the through-bores of the bush blocks 186, 188 for rotation therein as a plain bearing.

The tine mounting arrangement 100 is assembled by passing the rod extension 152 through the bore 134 in the base plate 120. The collar 154 extends below the base plate 120 with the spring 156 bearing against the base plate 120. The tine assembly 106 is then positioned by placing the pivot plate 170 between the side plates 116, 118. As this occurs, the bush blocks 186, 188 are sandwiched between the gusset pieces 122, 124 and 126, 128. Once the bush blocks 186, 188 are in place the motion stop bolts 142 are assembled to the gussets 122, 124, 126, 128 to constrain the bush blocks 186, 188 relative to the mounting frame 102.

The collar 154 is positioned between the plates 174, 176 of the collar receiving formation 172 and a pivot bolt 190 is passed therethrough to secure the collar 154 relative to the collar receiving formation 172. It is envisaged that in the rest position with the cushion 180 resting on the underside of the base plate 120 the spring 156 is firmly sandwiched between the reaction plate 158 and the base plate 120 such that it cannot move. Alternatively, the spring 156 may be under pre-compression (depending on the adjustment in length of the rod 146).

It will be understood that the plates 174, 176 of the collar receiving formation 172 are a distance apart wider than the width of the collar 154. In addition, the bolt 190 is of a diameter significantly smaller than the collar 154.

Referring to Figure 1, it will be understood that the tine has a general direction of travel as indicated by the X axis. A direction perpendicular to the direction of travel but also generally horizontal is signified by the Y axis. The Z axis is a vertical axis.

Because of the aforementioned differences in dimensions between the collar receiving formation 172, the collar 154 and the bolt 190, the pivot plate 170 not only rotates about Y but also about X.

The bush blocks 186, 188 are able to move vertically (along Z) to enable the pivot plate 170 to rotate about X within the joint housing 114. There is a clearance between the ends of the bush blocks 186, 188 and the side plates 116, 118. In addition, the distance between the motion stop bolts 142 and the base plate 120 is greater than the height of the bush blocks 186, 188. It will be noted that the bush blocks 186, 188 are positioned to be in surface-to-surface contact with each of the gusset pieces 122, 124, and 126, 128 throughout articulation of the joint.

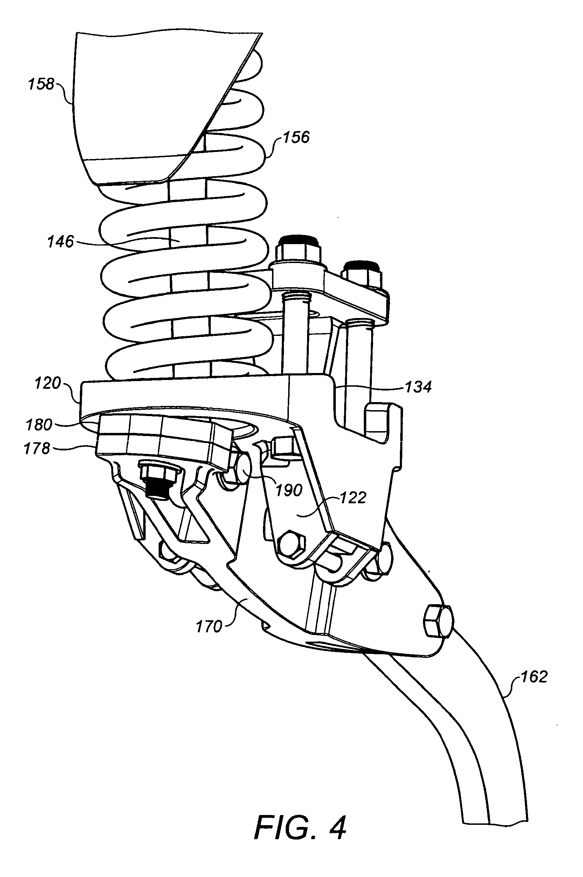

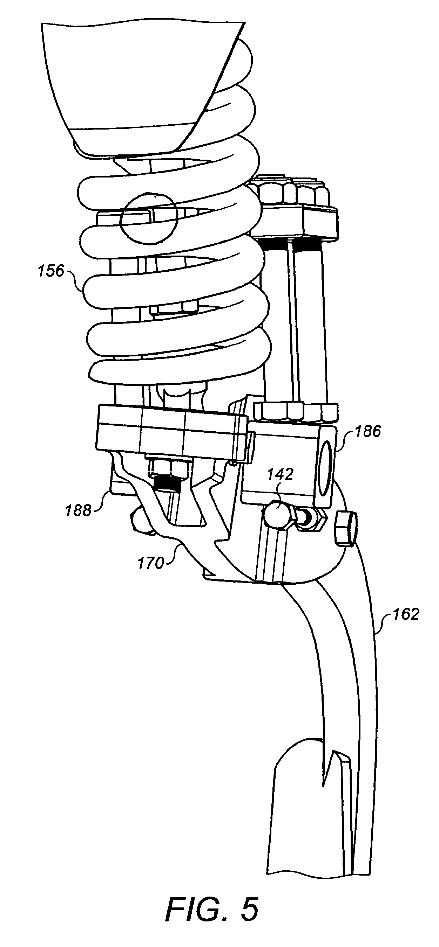

Referring to Figures 4 and 5, the tine mounting arrangement 100 is shown in the tilt mode. As can be seen, the tine 162 has encountered an obstacle which forces the tine assembly 106 to tilt about axis X. The abutment of the cushion 180 on the base plate 120 means that when moving in this degree of freedom, the collar 154 is pulled downwards by its interaction with the bolt 190. In doing so the rod 146 is pulled downwards compressing the spring 156 between the base plate 120 and the reaction plate 158. This provides a resilient force on the pivot plate 170 and attempts to restore the assembly 106 back to its original orientation against the rotation about axis X. Whilst undergoing this pivoting motion as can be seen in Figure 5, each of the bush blocks 186, 188 is able to move (i.e. rotate about X) within the joint housing 114. In this example, the bush block 186 comes to rest against the motion stop bolt 142 proximate the first side plate 116, thereby limiting any further rotation of the pivot plate 170. Once the obstacle has been overcome the resilience of the spring 156 will restore the assembly 106 to its original position.

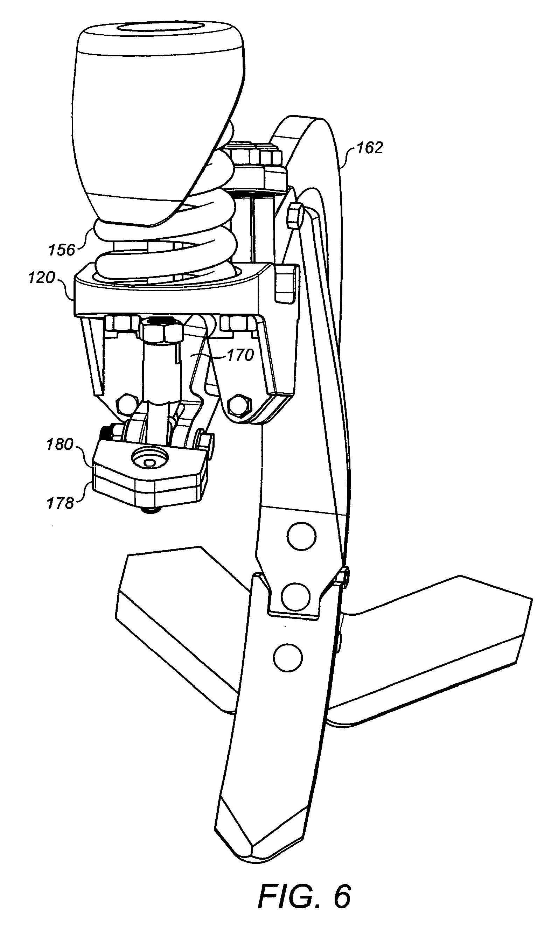

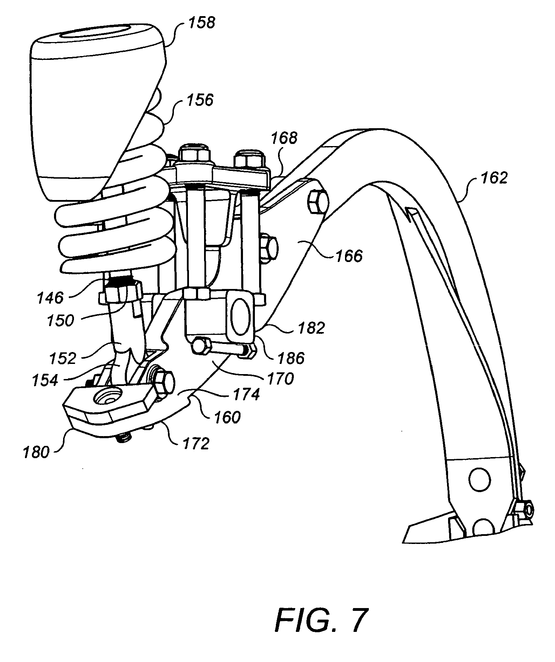

Referring now to Figures 6 and 7, a combined tilting and tripping degree of freedom is shown. As can be seen, the tine 162 is rotating about the X axis and is also rotating about the Y axis. In this mode, as can clearly be seen in Figure 6, the pivot plate 170 rotates about the pivot shafts 182, 184 within the bush blocks 186, 188 to rotate the cushion 180 clear of the base plate 120. This draws the collar 154 further below the base plate 120 thus compressing the spring 156 even further than in the tilting mode alone.

Referring to Figure 7, the tine mounting arrangement 100 can be seen without the joint housing 114. The contact between the bush blocks 186, 188 and the gusset pieces 122, 126 reacts the forces rotating the tine.

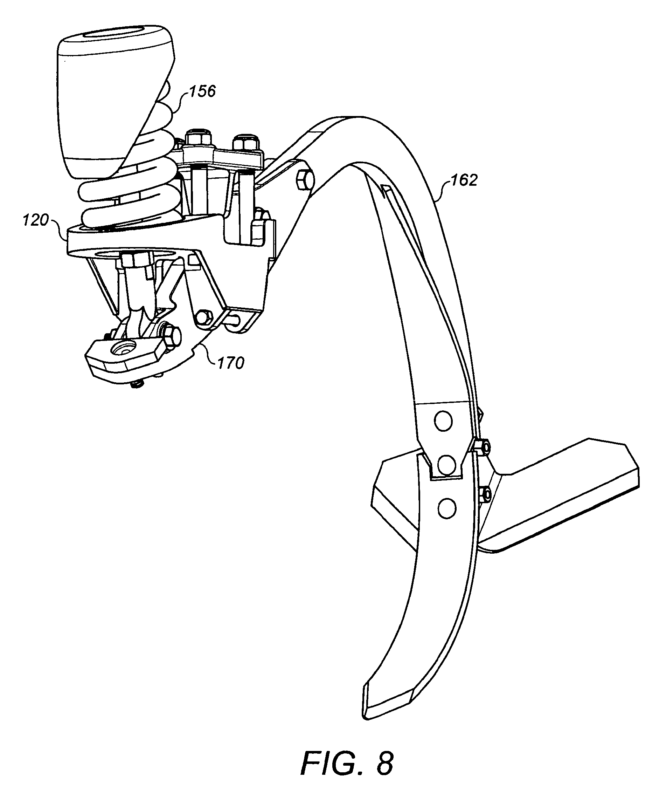

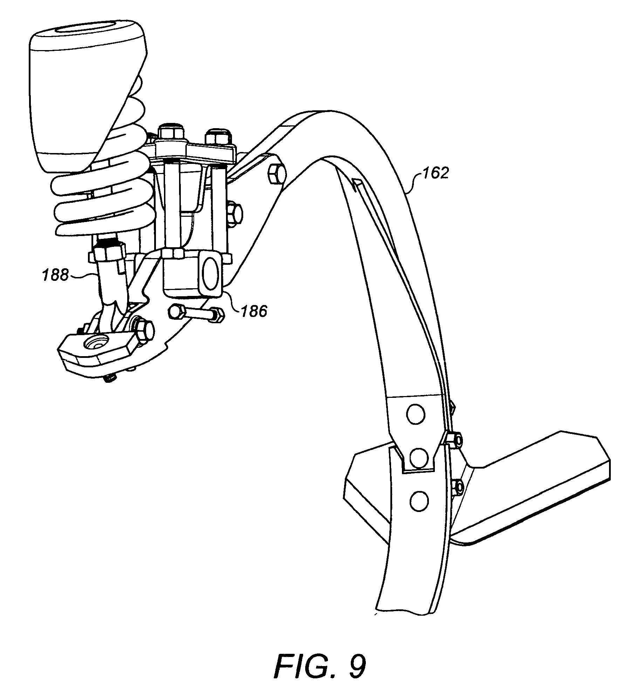

Finally, referring to Figures 8 and 9, the degree of freedom is shown in isolation whereby the tine 162 rotates only about the Y axis. In this mode the spring 156 is compressed when the pivot plate 170 rotates about the shafts 182, 184 thereby pulling the collar 154 further through the base plate 120 in order to compress the spring.

As can be seen from studying the above description, the use of bush blocks 186, 188 with shafts 182, 184 positioned therethrough provides that the load path between the tine 162 and the frame 102 is directed through surface-to-surface contact between the bush block and the joint housing. At no point is any point contact necessary between these two components in order to transfer the load. Therefore, damage of one or both components is reduced.

Furthermore, the use of this geometry allows for a single compression spring to resile the tine 162 back to its original position from either the tilt mode, trip mode or a combined mode.

It will be noted that the bush blocks 186, 188 are easily replaceable by removing the motion stop bolts 142, withdrawing the pivot plate 170 and simply sliding them off the pivot shafts 182, 184 for replacement. As such, the present invention offers improved serviceability over the prior art. The length of the rod 146 can be adjusted by rotation of the rod extension 152 relative thereto. As such, the preload on the spring 156 can be easily adjusted to suit the application.

The invention is defined by what falls within the scope of the appended claims.

## Claims

1. A mounting arrangement (100) for a tine comprising;
a mount (108) for attachment to an agricultural vehicle,
a tine support member (164) for attachment of a tine (162),
a joint (114) having a first side connected to the mount (108) and a second side connected to the support member (164), **characterised in that** one of the first and the second sides comprises a shaft (182) rotatably engaged within a sleeve (186,188) to rotate about a trip axis, the sleeve being movably mounted relative to the other of the first and the second sides.

2. A mounting arrangement for a tine according to claim 1 in which the sleeve (186,188) is mounted to be moveable within a plane to enable rotation of the sleeve about a tilt axis substantially perpendicular to the trip axis.

3. A mounting arrangement for a tine according to claim 2 in which the sleeve (186,188) is constrained from rotation about the trip axis.

4. A mounting arrangement for a tine according to any preceding claim in which the sleeve (186,188) defines an external first bearing surface, the joint (114) defines a second bearing surface, and the first and second bearing surfaces are arranged to be in sliding engagement upon movement of the sleeve (186,188).

5. A mounting arrangement for a tine according to claim 4 in which the sleeve (186,188) defines an external third bearing surface opposite the external first bearing surface, the joint (114) defines a fourth bearing surface, and the third and fourth bearing surfaces are arranged to be in sliding engagement upon movement of the sleeve (186,188).

6. A mounting arrangement for a tine according to any preceding claim in which a resilient element (156) is disposed between the support member (164) and the tine mounting portion (170) to restore the support member upon movement thereof to an initial position relative to the mount.

7. A mounting arrangement for a tine according to claim 5 in which the support member (164) comprises a tine attachment portion, and the resilient member (156) is disposed on an opposite side of the pivot axis to the tine attachment portion.

8. A mounting arrangement for a tine according to claim 4 or 5 in which the support member (164) comprises an engagement surface (120), the mount comprises a reaction plate (158) and the resilient member (156) is arranged to bias the engagement surface (120) and the reaction plate (158) into engagement upon separation thereof.

9. A mounting arrangement for a tine according to claim 8 in which the resilient member (156) is arranged to bias a central point on the engagement surface (120) and the reaction plate (158) into engagement upon relative rotation thereof

10. A mounting arrangement for a tine according to claim 8 or 9 in which the engagement surface (120) is parallel to the trip and tilt axes.

11. A mounting arrangement for a tine according to any of claims 8 to 10 in which the resilient member (156) is a compression spring positioned on an opposite side of the reaction plate (158) to the engagement surface (120), the spring having a first end positioned against the reaction plate (158) and the support member (164) comprises a pull rod (146) connected to a second end of the spring such that separation of the engagement (120) surface and the reaction plate (158) compresses the compression spring (156).

12. A mounting arrangement for a tine according to claim 11 in which the pull rod (146) is connection to the support member (164) via a rotational joint (154) rotatable about axes parallel to the trip and tilt axes.

13. A mounting arrangement for a tine according to claim 11 or 12 in which the resilient member (156) is pre-compressed with the engagement surface (120) and the reaction plate (158) in parallel engagement.

14. A mounting arrangement for a tine according to claim 13 dependent upon claim 12 in which the pull rod (146) is adjustable in length in order to apply a user-defined precompression to the spring (156).

15. A mounting arrangement for a tine according to any preceding claim in which the outer surface of the sleeve (186,188) is constructed from a plastics material, preferably nylon.

16. A mounting arrangement for a tine according to any preceding claim in which the sleeve (186,188) is constrained by a removable element.

17. A tine assembly (106) comprising a tine (162) mounted to a mounting arrangement according to any preceding claim.

## Patentansprüche

1. Eine Montageeinrichtung (100) für eine Zinke, aufweisend:
eine Halterung (108) zum Befestigen an einem landwirtschaftlichen Fahrzeug,
ein Zinkenträgerelement (164) zum Befestigen eines Zinkens (162),
ein Anschlußstück (114) mit einer ersten Seite, die mit der Halterung (108) verbunden ist, und einer zweiten Seite, die mit dem Trägerelement (164) verbunden ist, **dadurch gekennzeichnet, dass** eine von der ersten und von der zweiten Seite einen Schaft (182) aufweist, der in einer Hülse (186, 188) drehbar in Eingriff ist zum Rotieren um eine Fahrachse, wobei die Hülse relativ zur anderen Seite von der ersten und der zweiten Seite bewegbar montiert ist.

2. Eine Montageeinrichtung für eine Zinke gemäß Anspruch 1, wobei die Hülse (186, 188) so montiert ist, das sie in einer Ebene bewegbar ist, um eine Rotation der Hülse um eine Neigeachse zu ermöglichen, die im Wesentlichen senkrecht zur Fahrachse ist.

3. Eine Montageeinrichtung für eine Zinke gemäß Anspruch 2, wobei die Hülse (186, 188) an der Rotation um die Fahrachse beschränkt ist.

4. Eine Montageeinrichtung für eine Zinke gemäß irgendeinem vorhergehenden Anspruch, wobei die Hülse (186, 188) eine externe erste Lagerfläche definiert, das Anschlussstück (114) eine zweite Lagerfläche definiert, und die erste und die zweite Lagerfläche angeordnet sind, um bei einer Bewegung der Hülse (186, 188) in Gleiteingriff zu sein.

5. Eine Montageeinrichtung für eine Zinke gemäß Anspruch 4, wobei die Hülse (186, 188) eine externe dritte Lagerfläche definiert entgegengesetzt zur externen ersten Lagerfläche, das Anschlussstück (114) eine vierte Lagerfläche definiert, und die dritte und die vierte Lagerfläche angeordnet sind, um bei einer Bewegung der Hülse (186, 188) in Gleiteingriff zu sein.

6. Eine Montageeinrichtung für eine Zinke gemäß irgendeinem vorhergehenden Anspruch, wobei ein Federelement (156) zwischen dem Trägerelement (164) und dem Zinkenmontageabschnitt (170) angeordnet ist, um das Trägerelement bei dessen Bewegung in eine Ausgangsposition relativ zur Halterung zurückzuführen.

7. Eine Montageeinrichtung für eine Zinke gemäß Anspruch 5, wobei das Trägerelement (164) einen Zinkenbefestigungsabschnitt aufweist, und das Federelement (156) an einer Seite der Schwenkachse angeordnet ist, die dem Zinkenbefestigungsabschnitt entgegengesetzt ist.

8. Eine Montageeinrichtung für eine Zinke gemäß Anspruch 4 oder 5, wobei das Trägerelement (164) eine Eingriffsfläche (120) aufweist, die Halterung eine Reaktionsplatte (158) aufweist und das Federelement (156) angeordnet ist, um die Eingriffsfläche (120) und die Reaktionsplatte (158) bei deren Trennung in Eingriff vorzuspannen.

9. Eine Montageeinrichtung für eine Zinke gemäß Anspruch 8, wobei das Federelement (156) angeordnet ist, um einen zentralen Punkt auf der Eingriffsfläche (120) und die Reaktionsplatte (158) bei deren relativer Rotation in Eingriff vorzuspannen.

10. Eine Montageeinrichtung für eine Zinke gemäß Anspruch 8 oder 9, wobei die Eingriffsfläche (120) parallel zur Fahrachse und zur Neigungsachse ist.

11. Eine Montageeinrichtung für eine Zinke gemäß irgendeinem der Ansprüche 8 bis 10, wobei das Federelement (156) eine Druckfeder ist, welche an einer Seite der Reaktionsplatte (158) positioniert ist, die der Eingriffsfläche (120) entgegengesetzt ist, wobei die Feder ein erstes Ende aufweist, das gegen die Reaktionsplatte (158) positioniert ist, und das Trägerelement (164) eine Zugstange (146) aufweist, die mit einem zweiten Ende der Feder derartig verbunden ist, dass eine Trennung der Eingriffsfläche (120) und der Reaktionsplatte (158) die Druckfeder (156) zusammendrückt.

12. Eine Montageeinrichtung für eine Zinke gemäß Anspruch 11, wobei die Zugstange (146) mittels eines drehbaren Anschlussstücks (154), das um Achsen parallel zu der Fahrachse und der Neigungsachse drehbar ist, mit dem Trägerelement (164) verbunden ist.

13. Eine Montageeinrichtung für eine Zinke gemäß Anspruch 11 oder 12, wobei das Federelement (156) vorzusammengedrückt ist, bei parallelem in Eingriff sein der Eingriffsfläche (120) und der Reaktionsplatte (158).

14. Eine Montageeinrichtung für eine Zinke gemäß Anspruch 13 abhängig von Anspruch 12, wobei die Zugstange (146) in der Länge verstellbar ist, um einen benutzerdefinierten Vorzusammendruck auf die Feder (156) aufzubringen.

15. Eine Montageeinrichtung für eine Zinke gemäß irgendeinem vorhergehenden Anspruch, wobei die Außenfläche der Hülse (186, 188)aus einem Kunststoff, vorzugsweise Nylon, konstruiert ist.

16. Eine Montageeinrichtung für eine Zinke gemäß irgendeinem vorhergehenden Anspruch, wobei die Hülse (186, 188) durch ein entfernbares Element beschränkt ist.

17. Eine Zinkenvorrichtung (106), aufweisend einen Zinken (162), der an eine Montageeinrichtung gemäß irgendeinem vorhergehenden Anspruch montiert ist.

## Revendications

1. Dispositif de montage (100) pour une dent, comprenant :
une monture (108) pour une fixation à un véhicule agricole,
un élément de support de dent (164) pour la fixation d'une dent (162),
une liaison (114) comportant un premier côté relié à la monture (108) et un second côté relié à l'élément de support (164),
**caractérisé en ce que** l'un des premier et second côtés comprend une tige (182) introduite en rotation dans un manchon (186, 188) pour tourner sur un axe de pivotement, le manchon étant monté mobile par rapport au second ou premier côté.

2. Dispositif de montage pour une dent selon la revendication 1, dans lequel le manchon (186, 188) est monté pour être mobile à l'intérieur d'un plan pour permettre une rotation du manchon sur un axe de basculement globalement perpendiculaire à l'axe de pivotement.

3. Dispositif de montage pour une dent selon la revendication 2, dans lequel le manchon (186, 188) est soumis à une limitation de rotation sur l'axe de pivotement.

4. Dispositif de montage pour une dent selon l'une quelconque des revendications précédentes, dans lequel le manchon (186, 188) définit une première surface portante, extérieure, la liaison (114) définit une deuxième surface portante, et les première et deuxième surfaces portantes sont disposées de manière à être en contact coulissant lors du mouvement du manchon (186, 188).

5. Dispositif de montage pour une dent selon la revendication 4, dans lequel le manchon (186, 188) définit une troisième surface portante, extérieure, opposée à la première surface portante extérieure, la liaison (114) définit une quatrième surface portante, et les troisième et quatrième surfaces portantes sont disposées de manière à être en contact coulissant lors du mouvement du manchon (186, 188).

6. Dispositif de montage pour une dent selon l'une quelconque des revendications précédentes, dans lequel un élément élastique (156) est disposé entre l'élément de support (164) et la partie de montage de dent (170) pour ramener l'élément de support, lors de son mouvement, à une position initiale par rapport à la monture.

7. Dispositif de montage pour une dent selon la revendication 5, dans lequel l'élément de support (164) comprend une partie de fixation de dent, et l'élément élastique (156) est disposé sur un côté de l'axe de pivot opposé à la partie de fixation de dent.

8. Dispositif de montage pour une dent selon la revendication 4 ou 5, dans lequel l'élément de support (164) comprend une surface de contact (120), la monture comprend une plaque de réaction (158), et l'élément élastique (156) est conçu pour mettre en contact de manière contrainte la surface de contact (120) et la plaque de réaction (158) lors de leur séparation.

9. Dispositif de montage pour une dent selon la revendication 8, dans lequel l'élément élastique (156) est conçu pour mettre en contact de manière contrainte un point central sur la surface de contact (120) et la plaque de réaction (158) lors de leur rotation relative.

10. Dispositif de montage pour une dent selon la revendication 8 ou 9, dans lequel la surface de contact (120) est parallèle aux axes de pivotement et de basculement.

11. Dispositif de montage pour une dent selon l'une quelconque des revendications 8 à 10, dans lequel l'élément élastique (156) est constitué par un ressort de compression placé sur un côté de la plaque de réaction (158) opposé à la surface de contact (120), le ressort ayant une première extrémité placée contre la plaque de réaction (158), et l'élément de support (164) comprend une barre de traction (164) reliée à une seconde extrémité du ressort de telle sorte que la séparation de la surface de contact (120) et de la plaque de réaction (158) comprime le ressort de compression (156).

12. Dispositif de montage pour une dent selon la revendication 11, dans lequel la barre de traction (146) est reliée à l'élément de support (164) par l'intermédiaire d'une liaison rotative (154) apte à tourner sur des axes parallèles aux axes de pivotement et de basculement.

13. Dispositif de montage pour une dent selon la revendication 11 ou 12, dans lequel l'élément élastique (156) est précomprimé avec la surface de contact (120) et la plaque de réaction (158) en contact parallèle.

14. Dispositif de montage pour une dent selon la revendication 13 lorsqu'elle est dépendante de la revendication 12, dans lequel la barre de traction (146) est réglable en longueur afin d'appliquer au ressort (156) une précompression définie par l'utilisateur.

15. Dispositif de montage pour une dent selon l'une quelconque des revendications précédentes, dans lequel la surface extérieure du manchon (186, 188) est construite à partir d'une matière plastique, de préférence du nylon.

16. Dispositif de montage pour une dent selon l'une quelconque des revendications précédentes, dans lequel le manchon (186, 188) est contraint par un élément mobile.

17. Ensemble de dent (106) comprenant une dent (162) montée sur un dispositif de montage selon l'une quelconque des revendications précédentes.
